# EUROPEAN PATENT SPECIFICATION

(11) **EP 1 695 630 B1**
(45) Date of publication and mention of the grant of the patent: **22.06.2011**
(21) Application number: 04787843.4
(22) Date of filing: 10.09.2004
(51) Int. Cl.: A23F 3/16

(54) **BOTTLED BEVERAGE**
FLASCHENGETRÄNK
BOISSON EN BOUTEILLE

(30) Priority: 18.12.2003 JP 2003420910
(43) Date of publication of application: 30.08.2006
(73) Proprietor: KAO CORPORATION, Tokyo 103-8210 (JP)
(72) Inventor: IWASAKI, Masaki, KAO CORPORATION RESEARCH LAB., Tokyo 1318501 (JP); HOSOYA, Naoki, KAO CORPORATION RESEARCH LAB., Tokyo 1318501 (JP); YAMAMOTO, Shinji, KAO CORPORATION RESEARCH LAB., Tokyo 1318501 (JP); HOSHINO, Eiichi, KAO CORPORATION RESEARCH LAB., Tokyo 138501 (JP); TAKASHIMA, Shinichirou, KAO CORP. RESEARCH LAB., Tokyo 1318501 (JP)
(74) Representative: HOFFMANN EITLE
(86) International application number: PCT/JP2004/013202
(87) International publication number: WO 2005/060762

(56) References cited:
- EP-A- 1 297 749
- EP-A- 1 557 097
- JP-A- 6 142 405
- JP-A- 10 501 407
- JP-A- 2003 169 603
- JP-A- 2003 169 641
- JP-A- 2003 259 806
- ASTILL C ET AL: "Factors affecting the caffeine and polyphenol contents of black and green tea infusions" MEDICINAL & AROMATIC PLANTS ABSTRACTS, RESOURCES, NEW DELHI, INDIA - NEW DELHI, vol. 24, no. 3, 1 June 2002 (2002-06-01), XP018008809 ISSN: 0250-4367
- CHARRIER ET AL: "oxalate content and calcium binding capacity of tea and herbal teas" ASIA PACIFIC JOURNAL OF CLINICAL NUTRITION, vol. 11, 2002, pages 298-301, XP002529252 SMITH-GORDON JOURNAL, LONDON

## Description

### Field of the Invention

This invention relates to packaged beverages, each of which is mixed with a green tea extract, contains catechins at high concentration, is good in taste, and is also excellent in color tone stability when stored at high temperatures in a clear container.

### Background of the Invention

As effects of catechins, there have been reported a suppressing effect on the increase of cholesterol and an inhibitory effect on α-amylase activity (see, for example, Patent Documents 1 and 2). For such physiological effects to manifest, it is necessary for an adult to drink tea as much as 4 to 5 cups a day. Accordingly, there has been a demand for a technological method by which catechins can be mixed in beverages at high concentration in order to facilitate the ingestion of a large amount of catechins. As one of methods for this, catechins are added in a dissolved form to a beverage by using a concentrate of a green tea concentrate (see, for example, Patent Documents 3 to 5) or the like.

When a commercial concentrate of green tea extract is used as is, however, the resulting beverage has strong astringency and bitterness under the influence of the components contained in the concentrate of green tea extract and gives a poor feeling when it is swallowed, so that it is not suited for long-term drinking which is required to develop the physiological effects of catechins. As a method for reducing astringency which is one of elements that make the beverage unsuited for long-term drinking, on the other hand, there is a method that mixes dextrin. Sole reliance on this method is, however, not sufficient when catechins are mixed at high concentration. Further, it is not preferred to use a commercial concentrate of green tea extract as is even in a beverage system with a sweetener, because the resulting beverage is strong in astringency and bitterness, has an unnecessary flavor and taste derived from green tea, varies in bitterness and astringency during storage, is not good in the stability of bitterness and stringency, and therefore, is not suited for long-term drinking (for example, Patent Document 6). Moreover, the beverage is prone to changes in external appearance when stored at high temperatures and, when filled in a clear container, its color tone does not remain stable over a long term.

As a process for the production of low-caffeine tea polyphenols, there is a process that obtains high-purity polyphenols by removing, with a synthetic adsorbent or the like, caffeine to high extent (for example, polyphenol/caffeine ratio: 20000). However, taste components and bitterness suppressors inherently contained in a tea extract, such as amino acids and pectin, are also removed concurrently with the removal of caffeine. A beverage with such low-caffeine tea polyphenols added therein tends to change in bitterness and astringency when stored at high temperatures, is not good in the stability of bitterness and astringency, and is not suited for long-term drinking (for example, Patent Document 6). Further, the external appearance of the beverage also tends to change when stored at high temperatures and, when filled in a clear container, its color tone does not remain stable over a long term.
Patent Document 1: JP-A-60-156614
Patent Document 2: JP-A-03-133928
Patent Document 3: JP-A-2002-142677
Patent Document 4: JP-A-8-298930
Patent Document 5: JP-A-8-109178
Patent Document 6: JP-A-10-501407
EP 157097A represents prior art under Article 54(3) EPC and refers to a packaged beverage comprising a green tea extract which is obtained by dissolving a caffeine- containing catechin composition in a 9/1 to 1/9 mixed solution of an organic solvent and water, and then bringing the resultant solution into contact with activated carbon, activated carbon and acid clay or activated clay to selectively remove caffeine.
The packed beverage furthermore comprises from 0.092 to 0.5 wt.-% of non-polymer catechins, oxalic acid and caffeine. The weight ratio of non-polymer catechins to caffeine is 7 to 60. The weight ratio of oxalic acid to the non-polymer catechins is 0.002 to 0.035.
EP 1297749 A refers to a beverage having a concentrated or purified tea extract incorporated therein and containing (A) non-polymer catechins from 0.092 to 0.5 wt.-% and (B) quinnic acid, in a weight ratio of (B) / (A) falling within the range of 0.01 to 0.1.
J. Agric Food Chem. 2001, 49, 5340-5347 deals with factors affecting the caffeine and polyphenol contents of black and green tea infusions. The contributions of product and preparation variables on the total soluble solids, caffeine and polyphenol content of tea extracts were determined. The total polyphenols, caffeine and flavanols (dry basis) in original green and black teas are specified.

The present invention provides a packaged beverage with a green tea extract mixed therein, containing the following ingredients (A), (B) and (C):
(A) from 0.01 to 1.0 wt% of non-polymer catechins,
(B) oxalic acid or a salt thereof, and
(C) caffeine,
wherein a content weight ratio [(B) / (A)] of the oxalic acid or salt thereof (B) to the non-polymer catechins (A) is from 0.00005 to 0. 1, and a content weight ratio [(A) / (C)] of the non-polymer catechins (A) to the caffeine (C) is from 5 to 10000, and wherein the beverage further comprises from 0.001 to 0.5 wt% of sodium ions and from 0.001 to 0.2 wt% of potassium ions.

### Embodiments of the Invention

An object of the present invention is to provide a packaged beverage, which contains catechins at high concentration, is reduced in bitterness and astringency and is suited for long-term drinking even when a green tea extract is used, is excellent in the stability of bitterness and astringency and also in the feeling as it passes down the throat, tends to change in its external appearance when stored at high temperatures, and remains stable in its color tone even when filled in a clear container.

The present inventors have investigated to improve the taste and flavor of a packaged beverage, which contains catechins at high concentration, such that the packaged beverage would become acceptable for long-term drinking. As a result, it has been found that a beverage - which contains catechins at high concentration, is free of the flavor and taste of green tea, gives substantially no feeling of bitterness and astringency, is free of a foreign flavor and taste, is suited for long-term drinking, is excellent in the stability of bitterness and astringency and its feeling as it passes down the throat, and remains stable in color tone over a long term even when filled and stored in a clear container - can be obtained when the beverage has a composition that the concentration of oxalic acid is controlled and the ratio of caffeine to non-polymer catechins is adjusted.

The packaged beverage according to the present invention contains non-polymer catechins at high concentration, is free not only of the flavor and taste of green tea but also of other foreign flavor and taste, is reduced in bitterness and astringency and is suited for long-term drinking, is excellent in the stability of bitterness and astringency and its feeling as it passes down the throat, remains stable in color tone over a long term even when filled in a clear container and stored at high temperatures, andisuseful, for example, as a non-tea-based, packaged beverage.

The term "non-polymer catechins (A) " as used herein is a generic term, which collectively encompasses non-epicatechins such as catechin, gallocatechin, catechingallate and gallocatechingallate, and epicatechins such as epicatechin, epigallocatechin, epicatechingallate and epigallocatechingallate, and indicates not only non-polymer catechins but also non-oxide catechins.

The packaged beverage according to the present invention contains non-polymer catechins (A), each of which is in a form dissolved in water, at a content of from 0.01 to 1.0 wt%, preferably from 0.03 to 0.5 wt%, more preferably from 0.04 to 0.4 wt%, still more preferably from 0.05 to 0.3 wt%, yet more preferably from 0.06 to 0.3 wt%, even more preferably from 0.092 to 0.26wt%, still evenmore preferably from 0.1 to 0.15 wt%. Insofar as the content of non-polymer catechins falls within the above-described range, a great deal of non-polymer catechins can be taken with ease, and from the standpoint of the color tone of the beverage shortly after its preparation, this content range is also preferred. The concentration of the non-polymer catechins can be controlled by relying upon the amount of a green tea extract to be mixed.
Further, the daily intake of green tea required for an adult to exhibit the effects of the promotion of accumulated fat burning, the promotion of dietary fat burning and the promotion of β-oxidation gene expression in the liver is considered to be preferably 300mg or more, more preferably 450 mg or more, still more preferably 500 mg or more in terms of non-polymer catechins. Specifically, it has been confirmed that an anti-puffiness effect and/or visceral fat reducing effect can be brought about by ingesting a beverage or the like, which contains 483 mg, 555 mg or 900 mg of non-polymer catechins per package (JP-A-2002-326932).
Therefore, the daily intake of the packaged beverage according to the present invention by an adult can also be preferably 300 mg or more, more preferably 450 mg or more, still more preferably 500 mg or more in terms of non-polymer catechins. From the standpoint of assuring to meet the minimum daily intake requirement, the non-polymer catechins can be mixed in an amount of preferably 300 mg or more, more preferably 450 mg or more, still more preferably 500 mg or more in each package (350 to 500 mL) of the packaged beverage according to the present invention.

The content weight ratio [(B) / (A)] of the oxalic acid or a salt thereof (B) to the non-polymer catechins (A) in the packaged beverage according to the present invention is from 0.00005 to 0.1, preferably from 0.00005 to 0.07, more preferably from 0. 00005 to 0.05, still more preferably from 0.0005 to 0.05, even more preferably from 0.001 to 0.05, still even more preferably from 0. 001 to 0. 03. A [(B) / (A)] ratio in this range produces neither very strong bitterness or astringency nor strong puckeriness, and is excellent in the feeling when it is swallowed. Oxalic acid (B) in the present invention includes oxalic acid or a salt thereof, which exists in a green tea extract, flavoring, fruit extract and other ingredients, and also oxalic acid or a salt thereof newly added. When the concentration of oxalic acid in the beverage according to the present invention has been adjusted relying upon the concentration of oxalic acid in a green tea extract used as a raw material, an unduly low concentration of oxalic acid indicates that the degree of purification of the green tea extract used as the rawmaterial was excessively high and bitterness suppressors and the like derived from tea leaves were removed at the same time. Such a green tea extract is, therefore, not preferred. An excessively high concentration of oxalic acid, on the other hand, leads to the production of puckeriness derived from oxalic acid. Such a green tea extract is, therefore, not suited for being mixed into the beverage.

The content weight ratio [(A) / (C)] of the non-polymer catechins (A) to the caffeine (C) in the packaged beverage according to the present invention is from 5 to 10000, preferably from 10 to 10000, more preferably from 20 to 10000, still more preferably from 25 to 4000, even more preferably from 35 to 1000. An unduly low ratio of non-polymer catechins to caffeine impairs the inherent external appearance of the beverage and is not preferred. An excessively high ratio of non-polymer catechins to caffeine is not preferred either from the standpoint of a balanced flavor and taste. The caffeine (C) includes caffeine naturally existing in a green tea extract, flavoring, fruit extract and other ingredients, and also newly added caffeine.

To make an improvement in the taste, a sweetener may be used in the packaged beverage according to the present invention. As the sweetener, an artificial sweetener, carbohydrate or glycerol (for example, glycerin) canbeused. Such a sweetener is contained preferably at from 0.0001 to 20 wt%, preferably at from 0.001 to 15 wt%, more preferably at from 0.001 to 10 wt%. A content lower than the lower limit provides substantially no sweetness, and cannot achieve a balance with sour and salty tastes. A content higher than the upper limit, on the other hand, results in excessive sweetness, so that a feeling of being caught in the throat is strong as the beverage passes down the throat.

Example of an artificial sweetener for use in the present invention include high-sweetness sweeteners such as saccharin, saccharin sodium, aspartame, acesulfame-K, sucralose and neotame; and sugar alcohols such as sorbitol, erythritol and xylitol. As a commercial product, "SLIM-UP SUGAR" composed of aspartame, "LAKANTO-S" containing erythritol, or "PALSWEET" composed of erythritol and aspartame can be used as desired. The content of such an artificial sweetener is the same as described above.

As a carbohydrate sweetener for use in the present invention, a soluble carbohydrate can be used. A soluble carbohydrate plays a role not only as a sweetener but also as an energy source. Upon choosing a carbohydrate for use in the beverage according to the present invention, it is important to take into consideration the need for a sufficient gastric emptying rate and intestinal absorption rate. The carbohydrate can be a mixture of glucose and fructose, or a carbohydrate hydrolyzable into glucose and fructose or capable of forming glucose and fructose in the digestive tract. The term "carbohydrate" as used herein includes monosaccharides, disaccharides, oligosaccharides, conjugated polysaccharides, and mixtures thereof.

Monosaccharides usable in the present invention include tetroses, pentoses, hexoses and ketohexoses. Examples of hexoses include aldohexoses such as glucose known as grape sugar. The content of glucose in the packaged beverage according to the present invention is preferably from 0.0001 to 20 wt%, more preferably from 0.001 to 15 wt%, still more preferably from 0.001 to 10 wt%. Fructose known as fruit sugar is a ketohexose. The content of fructose in the packaged beverage according to the present invention is preferably from 0.0001 to 20 wt%, more preferably from 0.001 to 15 wt%, still more preferably from 0.001 to 10 wt%.

As a carbohydrate sweetener for use in the present invention, a soluble carbohydrate can be employed. As an oligosaccharide, a carbohydrate which forms these two monosaccharides in vivo (specifically, sucrose, maltodextrin, corn syrup, and fructose-rich corn syrup) can be mentioned. It is a disaccharide that is an important type of the oligosaccharide. An illustrative disaccharide is sucrose known as cane sugar or beet sugar. The content of sucrose in the packaged beverage according to the present invention can be preferably from 0.001 to 20 wt%, more preferably from 0.001 to 15 wt%, still more preferably from 0.001 to 10 wt%.
As a sweetener in the packaged beverage according to the present invention, the use of a carbohydrate sweetener is preferred when the packaged beverage is also intended to replenish energy. When no positive energy replenishment is intended, on the other hand, the use of an artificial sugar is preferred. Among artificial sugars, a single system of artificial sugar or a combination of an artificial sugar and a glucose compound or an artificial sugar and a fructose compound is preferred. With a system making use of glucose and fructose in large amounts, the resulting catechin-containing beverage may change in flavor and taste as a result of variations in temperature.
When a carbohydrate is used as a sweetener, the content of the carbohydratemay, therefore, be preferably from 0. 0001 to 20 wt% in terms of equivalent fructose amount and less than 0.05 wt% in terms of equivalent glucose amount, more preferably from 0.0001 to 15 wt% in terms of equivalent fructose amount and less than 0. 05 wt% in terms of equivalent glucose amount, still more preferably from 0.001 to 10 wt% in terms of equivalent fructose amount and less than 0.05 wt% in terms of equivalent glucose fructose amount. Insofar as the equivalent fructose amount and equivalent glucose amount fall within these ranges, neither very strong bitterness and astringency nor strong puckeriness is produced and bitterness and astringency are lessened, so that the packaged beverage is suited for long-term drinking and is excellent in the stability of bitterness and astringency and also in the feeling when it is swallowed.

The packaged beverage according to the present invention contains sodium ions and potassium ions. Beverages of the present invention with such ions incorporated therein are useful in the form of drinks such as sports drinks and isotonic drinks. The term "sports drink" is generally defined to mean a drink that can promptly replenish water and minerals lost in the form of sweat during physical exercise.

Sodium and potassium can be mentioned as primary physiological electrolytes. These ion ingredients can be included by adding their corresponding water-soluble ingredients or inorganic salts. They are also found in fruit extracts and tea extracts. The amount of an electrolyte or ion ingredient in the beverage according to the present invention is its content in the final packagedbeverage ready for drinking. The concentration of each electrolyte means an ion concentration, and does not mean salt concentration. In the beverage according to the present invention, a potassium ion ingredient can be mixed as a salt such as potassium chloride, potassium carbonate, potassium sulfate, potassium acetate, potassium hydrogencarbonate, potassium citrate, potassiumphosphate, potassiumhydrogenphosphate, potassium tartrate, potassium sorbate or a mixture thereof or as a component of an added fruit extract or tea. In the packaged beverage according to the present invention, potassium ions are contained fom 0.001 to 0.2 wt%, more preferably at from 0.002 to 0.15 wt%, still more preferably at from 0.003 to 0.12 wt%. Similarly, a sodium ion ingredient can also be mixed as a readily-available sodium salt such as sodium chloride, sodium carbonate, sodium hydrogencarbonate, sodium citrate, sodium phosphate, sodium hydrogenphosphate, sodium tartrate, sodium benzoate or a mixture thereof or as a component of an added fruit extract or tea. A lower sodium ion concentration is desired from the standpoint of facilitating the absorption of water under osmotic pressure. It is, however, important in the present invention that the sodium ion concentration be at such a level as avoiding the absorption of water into the intestine from the body under osmotic pressure. The sodium ion concentration required to achieve such a level can preferably be lower than the plasma sodium ion concentration. In the packaged beverage according to the present invention, sodium ions are contained from 0.001 to 0.5 wt%, more preferably at from 0.002 to 0.4 wt%, still more preferably at from 0.003 to 0.2 wt%. In addition to potassium ions and sodium ions, preferably from 0.001 to 0.5 wt%, more preferably from 0.002 to 0.4 wt%, still more preferably from 0.003 to 0.3 wt% of chloride ions can also be incorporated in the packaged beverage according to the present invention. A chloride ion ingredient can be mixed in the form of a salt such as sodium chloride or potassium chloride. Further, trace ions such as calcium, magnesium, zinc and/or iron ions can also be mixed. These ions can also be mixed in the form of salt or salts. The total amount of ions existing in the beverage includes not only an added amount of ions but also an amount of ions naturally existing in the beverage. When sodium chloride is added, for example, the amounts of sodium ions and chloride ions in the thus-added sodium chloride are included in the total amounts of the corresponding ions existing in the beverage, respectively.

From the standpoint of the stability of catechins, the pH of the packaged beverage according to the present invention may be preferably from 2 to 6, more preferably from 2 to 5, still more preferably from 2 to 4.5. An excessively low pH provides the beverage with a strong sour taste and pungent smell. An unduly high pH, on the other hand, makes it impossible to provide a balanced flavor and taste, leading to a deterioration in taste, and therefore, is not preferred.

Depending upon the situation of drinking, an excessively low concentration of sodium ions and potassium ions may be unable to provide a fulfilled feeling in taste and to achieve an effective replenishment of minerals, and therefore, may not be preferred. An unduly high concentration of sodium ions and potassium ions, on the other hand, leads to stronger tastes of the salts themselves and is not preferred for long-term drinking.

The packaged beverage according to the present invention can be obtained by adjusting the composition of a green tea extract and mixing other necessary ingredients.
The green tea extract, which is useful as a rawmaterial, may preferably be one obtained by removing caffeine from a concentrate of a green tea extract, which contains from 20 to 90 wt% of non-polymer catechins based on a solid content thereof, such that the content weight ratio [(A)/(C)] of non-polymer catechins (A) to caffeine (C) falls within the range of from 5 to 10000. The "green tea extract" as used herein can be obtained by further purifying a concentrate of an extract of tea leaves in hot water or a water-soluble organic solvent or directly purifying the extract such that the ratio of non-polymer catechins (A) to caffeine (C) is controlled. Further, the green tea extract can also be one obtained by treating tea leaves or a preparation under a supercritical fluid, or one obtained by having catechins adsorbed on an adsorbent, desorbing them with an aqueous solution of ethanol and then purifying them. Furthermore, a green tea extract suited for the object of the present invention can also be obtained by using a
commercially-available concentrate of green tea extract, such as "POLYPHENON" (Mitsui Norin Co., Ltd.), "TEAFURAN"
(ITO EN, LTD.) or "SUNPHENON" (Taiyo Kagaku Co., Ltd.), and adjusting in components between its non-polymer catechins and caffeine.

As a purification method of a concentrate of green tea extract, the concentrate of green tea can be purified, for example, by suspending the concentrate of green tea extract in water or a mixture of water and an organic solvent, adding an organic solvent to the resultant suspension, removing the resulting precipitate, and then, distilling off the solvent; by dissolving the concentrate of green tea extract in an organic solvent, adding water or a mixture of water and an organic solvent to the resultant solution, removing the resulting precipitate, and then, distilling off the solvent; or by dissolving the concentrate of green tea extract in water, chilling the resultant solution to 5°C or lower to cause creaming down, and then removing a roiled sediment. As a more preferred method, it is also possible to dissolve a concentrate of green tea extract, said concentrate containing from 20 to 90 wt% of non-polymer catechins based on a solid content thereof, in a 9/1 to 1/9 mixed solution of an organic solvent and water and then to bring the resulting solution into contact with activated carbon and acid clay or activated clay. In addition to those mentioned above, it is also possible to use one obtained by purification through supercritical extraction or one obtained by having the concentrate of green tea extract adsorbed on an adsorbent resin and eluting it with an ethanol solution.

As the form of the "green tea extract" as used herein, various forms can be mentioned such as a solid, aqueous solution and slurry. For a shorter history of being dried or the like, the form of an aqueous solution or slurry is preferred.

The content weight ratio [(A)/(C)] of non-polymer catechins (A) to caffeine (C) in the green tea extract for use in the present invention may be preferably from 5 to 10000, more preferably from 10 to 10000, still more preferably from 10 to 8000, even more preferably from 10 to 6000, still even more preferably from 10 to 4000, yet still even more preferably from 10 to 1000. An unduly low ratio of non-polymer catechins to caffeine in the green tea extract leads to abundant inclusion of ingredients other than the non-polymer catechins in a beverage, impairs the inherent external appearance of the beverage, and is not preferred. An excessively high ratio of non-polymer catechins to caffeine in the green tea extract, on the other hand, results in the elimination of bitterness suppressors and the like, which have been derived from tea leaves, at the same time as the removal of caffeine, and is not preferred from the standpoint of a balanced flavor and taste.

The concentration of non-polymer catechins in the green tea extract for use in the present invention can be preferably from 20 to 90 wt%, more preferably from 20 to 87 wt%, still more preferably from 23 to 85 wt%, even more preferably from 25 to 82 wt%.
If the concentration of non-polymer catechins in a green tea extract is too low, a purified product itself of a green tea extract should be mixed at a higher concentration to a beverage. If the concentration of non-polymer catechins in a green tea extract is too high, on the other hand, there is a tendency that trace components and the like other than total polyphenols - which are represented by free amino acids, exist in the green tea extract and serve to improve the flavor and taste - are excluded.

The percentage of gallates, which is a generic term and consists of catechingallate, epicatechingallate, gallocatechingallate and epigallocatechingallate, based on all non-polymer catechins in the green tea extract for use in the present invention can preferably be from 35 to 100 wt% from the standpoint of the effectiveness of physiological effects of the non-polymer catechins. From the standpoint of the readiness in adjusting the taste, the percentage of gallates may be more preferably from 35 to 98 wt%, still more preferably from 35 to 95 wt%.

The mixing of a bitterness suppressor to the packaged beverage according to the present invention facilitates its drinking and therefore, is preferred. The bitterness suppressor to be used can preferably be, but is not particularly limited to, a cyclodextrin. As the cyclodextrin, an α-, β- or γ-cyclodextrin or a branched α-, β- or γ-cyclodextrin can be used. In the beverage, a cyclodextrin may be contained at a concentration of from 0.005 to 0.5 wt%, preferably from 0.01 to 0.3 wt%. In the packaged beverage according to the present invention, it is possible to mix either singly or in combination, as an ingredient or ingredients which can be added from the standpoint of formulation together with ingredients derived from tea, additives such as antioxidants, flavorings, various esters, organic acids, organic acid salts, inorganic acids, inorganic acid salts, inorganic salts, colorants, emulsifiers, preservatives, seasoning agents, sweeteners, sour seasonings, gums, emulsifiers, oils, vitamins, amino acids, fruit extracts, vegetable extracts, flower honey extracts, pH regulators and quality stabilizers.

A flavoring and/or a fruit extract can be mixed in the beverage according to the present invention to make an improvement in taste. In general, fruit extract is called "fruit juice", while flavoring is called "flavor". Natural or synthetic flavorings and fruit extracts can be used in the present invention. They can be selected from fruit juices, fruit flavors, plant flavors, or mixtures thereof. In particular, a combination of a tea flavor, preferably a green tea or black tea flavor in combination with a fruit juice has a preferred taste. Preferred fruit extracts include juices of apple, pear, lemon, lime, mandarin, grapefruit, cranberry, orange, strawberry, grape, kiwi, pineapple, passion fruit, mango, guava, raspberry and cherry. More preferred are citrus juices, with grapefruit, orange, lemon, lime and mandarin juices, mango juice, passion fruit juice and guava juice, and mixtures thereof being even more preferred. Preferred natural flavors are jasmine, chamomile, rose, peppermint, Crataegus cuneata, chrysanthemum, water caltrop, sugar cane, bracket fungus of the genus Formes (Formes japonicus), bamboo shoot, and the like. A fruit juice can exist as a base, to which flavanol and other ingredients are added, or is used as a flavoring or fruit extract. The concentration of a fruit extract in the beverage according to the present invention may be preferably from 0.001 to 20 wt%, more preferably from 0.002 to 10 wt%. This concentration is based on the single strength of the beverage. One ormore of fruit flavors, plant flavors, tea flavors ormixtures thereof can be used as a fruit extract. Particularly preferred flavorings are citrus flavors including orange flavor, lemon flavor, lime flavor and grape fruit flavor. In addition to such citrus flavors, various other fruit flavors such as apple flavor, grape flavor, raspberry flavor, cranberry flavor, cherry flavor, pineapple flavor and the like can be used. These flavors may be derived from natural sources such as fruit juices and balms, or may be synthesized. The term "flavoring" as used herein can also include blends of various flavors, for example, a blend of lemon and lime flavors and blends of citrus flavors and selected spices (typically, flavors for cola and other soft drinks). Such a flavoring may be contained preferably at from 0.0001 to 5 wt%, more preferably at from 0.001 to 3 wt% in the beverage according to the present invention.

The beverage according to the present invention may also contain a sour seasoning as needed. As the sour seasoning, an edible acid such as malic acid, citric acid, tartaric acid or fumaric acid can be mentioned. The sour seasoning may be used to adjust the pH of the beverage according to the present invention. The preferred pH of the beverage according to the present invention is from 2 to 5. As a pH adjuster, an organic or inorganic edible acid can be used. Acids can exist either in non-dissociated forms or in the form of their salts, for example, such as potassium and sodium phosphates, or potassium and sodium dihydrogenphosphates. Preferred acids are edible organic acids and inorganic acids including citric acid, malic acid, fumaric acid, adipic acid, gluconic acid, tartaric acid, ascorbic acid, acetic acid, phosphoric acid, and mixtures thereof. More preferred acids are citric acid and malic acid. These sour seasonings are also useful as antioxidants which stabilize beverage ingredients. Examples of commonly-employed antioxidants include, but are not limited to, ascorbic acid, EDTA (ethylenediaminetetraacetic acid) and salts thereof, and plant extracts.

In the beverage of the present invention, one or more vitamins can be incorporated further. Preferably, vitamin A, vitamin C, and vitamin E may be added. Other vitamins such as vitamin D and vitamin B may also be added. One or more minerals can also be mixed in the beverage according to the present invention. Preferred minerals include calcium, chromium, copper, fluorine, iodine, iron, magnesium, manganese, phosphorus, selenium, silicon, molybdenum, and zinc. More preferred minerals are magnesium, phosphorus, and iron.

Preferred as the beverage in the packaged beverage according to the present invention is a non-tea-based beverage, for example, a non-tea-based beverage obtained by adding to a green tea extract one or more ingredients selected from sodium ions and/or potassium ions, sweeteners, bitterness suppressors, flavorings, fruit extracts, vegetable extracts, sour seasonings, vitamins, minerals, carbon dioxide, and the like.
Non-tea-based, packaged beverages include, for example, carbonated beverages as soft drinks, beverages with fruit extracts, juices with vegetable extracts, near waters, sport drinks, diet drinks, and the like.

As in general beverages, a package useful with the packaged beverage according to the present invention can be provided in a conventional form such as a molded package made of polyethylene terephthalate as a principal component (a so-called PET bottle), a metal can, a paper container combined with metal foils or plastic films, a bottle or the like. The term "packaged beverage" as used herein means a beverage that can be taken without dilution.

The packaged beverage according to the present invention can be produced, for example, by filling the beverage in a package such as a metal can and, when heat sterilization is feasible, conducting heat sterilization under sterilization conditions as prescribed in the Food Sanitation Act. For those which cannot be subjected to retort sterilization like PET bottles or paper packages, a process is adopted such that the beverage is sterilized beforehand at a high temperature for a short time under similar sterilization conditions as those described above, for example, by a plate-type heat exchanger or the like, is cooled to a particular temperature, and is then filed in a package. Under aseptic conditions, additional ingredients may be mixed to and filled in a beverage-filled package. It is also possible to conduct an operation such that subsequent to heat sterilization under acidic conditions, the pH is caused to rise back to neutral under aseptic conditions or that subsequent to heat sterilization under neutral conditions, the pH is caused to drop back to the acidic side under aseptic conditions.

### Examples

### Quantitation of catechins

A high-performance liquid chromatograph (model: "SCL-10AVP") manufactured by Shimadzu Corporation was used. The chromatograph was fitted with an octadecyl-introduced, packed LC column, "L-Column, TM ODS" (4.6mm × 250 mm; product of Chemicals Evaluation and Research Institute, Japan). A packaged beverage, which had been filtered through a filter (0.8µm) and then diluted with distilled water, was subj ected to chromatography at a column temperature of 35°C by gradient elution. A 0.1 mol/L solution of acetic acid in distilled water and a 0. 1 mol/L solution of acetic acid in acetonitrile were used as mobile phase solution A and mobile phase solution B, respectively. A measurement was conducted under the conditions of 20 µL injected sample quantity and 280 nm UV detector wavelength.

### Quantitation of caffeine

### (Analyzer)

AHPLC system (manufacturedbyHitachi, Ltd.) was used.
Plotter: "D-2500", Detector: "L-4200",
Pump: "L-7100", Autosampler: "L-7200",
Column: "INTERSIL ODS-2" (2.1 mm inner diameter x 250 mm length).

### (Analytical conditions)

Sample injection volume: 10 µL
Flow rate: 1.0 mL/min
Detection wavelength of UV spectrophotometer: 280 nm

Eluent A: A 0.1 M solution of acetic acid in water
Eluent B: A 0.1 M solution of acetic acid in acetonitrile

Concentration gradient conditions (vol. %)

| Time | Eluent A | Eluent B |
|---|---|---|
| 0 min | 97% | 3% |
| 5 min | 97% | 3% |
| 37 min | 80% | 20% |
| 43 min | 80% | 20% |
| 43.5 min | 0% | 100% |
| 48.5 min | 0% | 100% |
| 49 min | 97% | 3% |
| 62 min | 97% | 3% |

### (Retention time of caffeine)

### Caffeine: 27.2 min

From each area % determined here, the corresponding wt% was determined based on the standard substance.

### Quantitation of oxalic acid

An ion chromatograph (model: DXAQ1110, manufactured by Japan Dionex Co., Ltd.) was fitted with a column, "IonPac AS4A-SC" (4 × 250 mm) and was connected to a suppressor, "ASRS-ULTRA" (manufactured by Dionex Corporation). Quantitation of oxalic acid was performed in the recycle mode. As mobile phases, 1.8 mmol/L Na₂CO₃ and 1.7 mmol/L NaHCO₃ were fed at 1.0 mL/min. The injected sample quantity was set at 25 µL. An electrical conductivity detector was used as a detector.

Determination of equivalent glucose amount and equivalent fructose amount
Free fructose, glucose and sucrose were quantitated by the below-described method (1), and post-hydrolysis fructose and glucose were quantitatedby the below-described method (2). From those quantitation values, an equivalent glucose amount and equivalent fructose amount were determined.

### (1) The Japan Food Research Laboratories method relying upon HPLC (free fructose, glucose and sucrose)

Each sample was collected, to which water was added, followed by neutralization and removal of interfering substances. The thus-prepared solution was filtered through a membrane filter (pore diameter: 0. 45 µm) to provide a test solution. The test solution was measured by HPLC under the following conditions.

### <Conditions for high-performance liquid chromatography>

Model: "LC-10ADvp" (Shimadzu Corporation)
Detector: Differential refractometer, "RID-10A" (Shimadzu Corporation)
Column: "Wakosil 5NH₂" (4.6 mm in diameter × 250 mm, Wako Pure Chemical Industries, Ltd.)

### (2) The Japan Food Research Laboratories method relying upon HPLC (fructose and glucose after their hydrolyses)

Each sample was collected, hydrolyzed with hydrochloric acid, cooled, filtered (No. 5B), and then filtered through a membrane filter (pore diameter: 0.45µm) to provide a test solution. The test solution was measured by HPLC under the following conditions.

### <Conditions for high-performance liquid chromatography>

Model: "LC-10ADvp" (Shimadzu Corporation)
Detector: Spectrofluorometer, "RF-10AXL" (Shimadzu Corporation)
Column: "TSKgel SUGAR AXI" (4.6 mm in diameter x 150 mm, TOSOH CORPORATION)

### Quantitation of sodium ions

Atomic fluorescence spectroscopy (extraction with hydrochloric acid)
Each sample (5g) was placed in 10% hydrochloric acid (to provide a 1% HCl solution when dissolved to a predetermined volume). With deionized water, the resulting solution was then brought to the predetermined volume, and its absorbance was measured.
Wavelength: 589.6 nm
Flame: acetylene-air

### Quantitation of potassium ions

Atomic fluorescence spectroscopy (extraction with hydrochloric acid)
Each sample (5 g) was placed in 10% hydrochloric acid (to provide a 1% HCl solution when dissolved to a predetermined volume). With deionized water,the resulting solution was then brought to the predetermined volume, and its absorbance was measured.

### Examples 1-5 & Comparative Examples 1-3

Packaged beverages were each produced by mixing the corresponding ingredients shown in Table 1 and then conducting predetermined post-treatment.

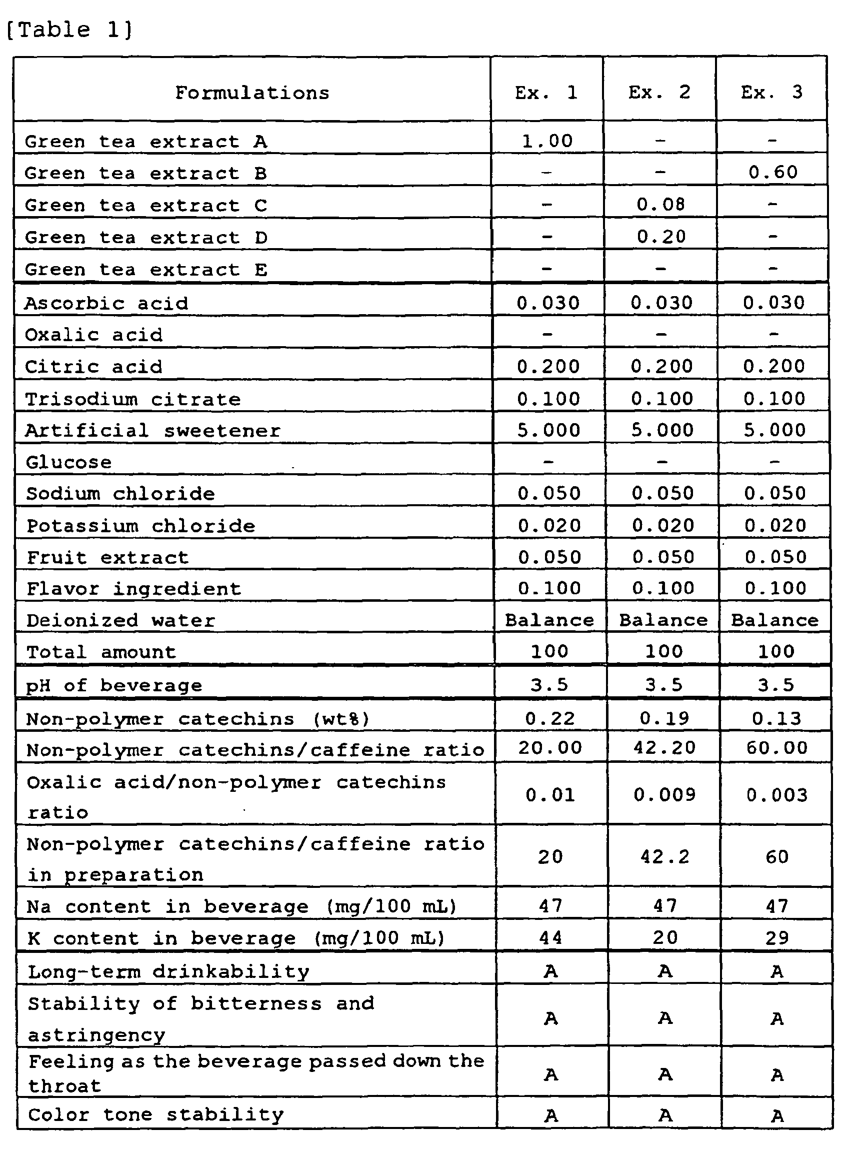

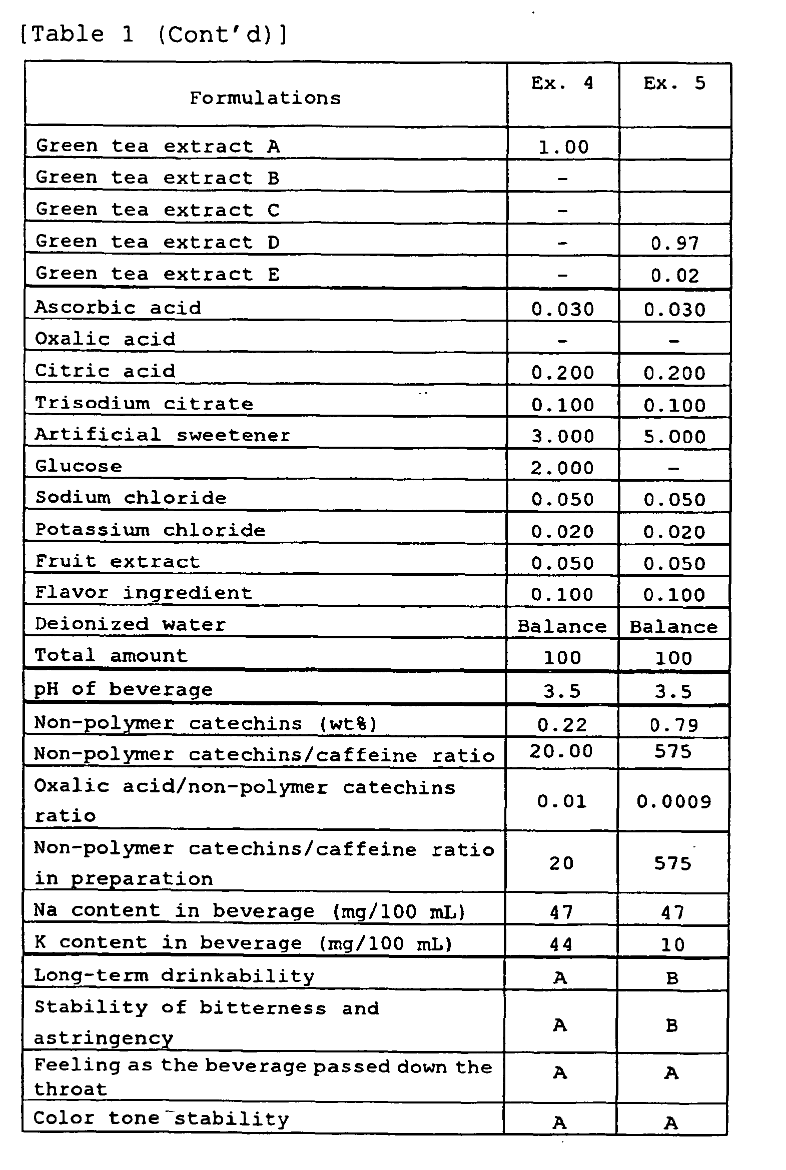

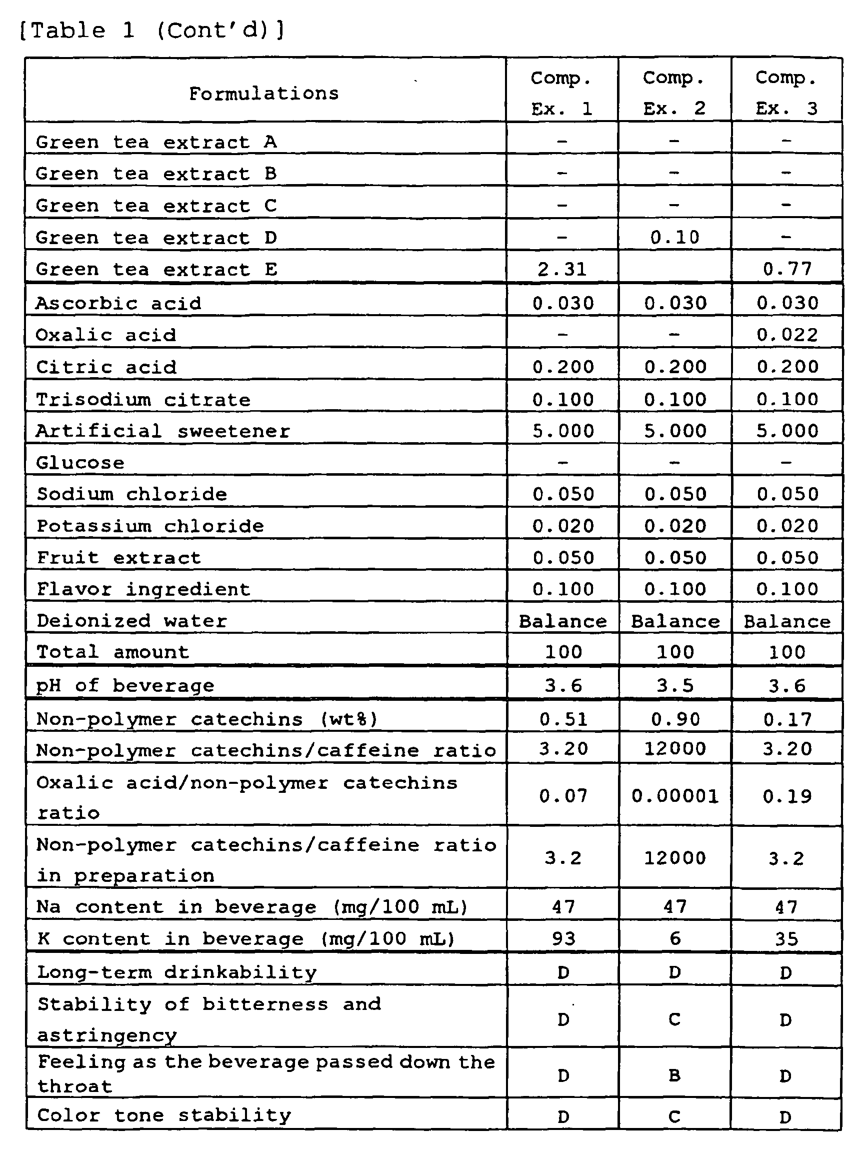

### (*1) Green tea extract A

"POLYPHENON HG" (100 g, product of Tokyo Food Techno Co., Ltd.) was suspended as a concentrate of green tea extract in a 95% aqueous solution of ethanol (490.9 g) at room temperature under a stirring condition of 250 rpm. After activated carbon "KURARAY COAL GLC" (25 g, product of Kuraray Chemical K.K.) and acid clay "MIZKAACE #600" (30 g, product of Mizusawa Chemical Industries, Ltd.) were poured, the resulting mixture was continuously stirred for about 10 minutes. Subsequent to the dropwise addition of a 40% aqueous solution of ethanol (409.1 g) over 10 minutes, stirring was continued for about 30 minutes still at room temperature. After the activated carbon and a precipitate were filtered off by No. 2 filter paper, the filtrate was filtered again through a 0.2 µm membrane filter. Finally, deionized water (200 g) was added to the filtrate, and ethanol was distilled off at 40°C and 0.0272 kg/cm² to obtain the product.
After the treatment, the content of non-polymer catechins was 22 wt%.
The weight ratio of non-polymer catechins to caffeine after the treatment = 20.0
The weight ratio of oxalic acid to non-polymer catechins after the treatment = 0.01

### (*1) Green tea extract B

"POLYPHENON HG" (100 g, product of Tokyo Food Techno Co., Ltd.) was suspended as a concentrate of green tea extract in a 95% aqueous solution of ethanol (490.9 g) at room temperature under a stirring condition of 250 rpm. After activated carbon "KURARAY COAL GLC" (40g, product of Kuraray Chemical K.K.) and acid clay "MIZKA ACE #600" (70 g, product of Mizusawa Chemical Industries, Ltd.) were poured, the resulting mixture was continuously stirred for about 10 minutes. Subsequent to the dropwise addition of a 40% aqueous solution of ethanol (409.1 g) over 10 minutes, stirring was continued for about 30 minutes still at room temperature. After the activated carbon and a precipitate were filtered off by No. 2 filter paper, the filtrate was filtered again through a 0.2 µm membrane filter. Finally, deionizedwater (200 g) was added to the filtrate, and ethanol was distilled off at 40°C and 0.0272 kg/cm² to obtain the product.
After the treatment, the content of non-polymer catechins was 22 wt%.
The weight ratio of non-polymer catechins to caffeine after the treatment = 60.0
The weight ratio of oxalic acid to non-polymer catechins after the treatment = 0.003

### (*1) Green tea extract C

A concentrate of green tea extract. The content of non-polymer catechins was 33.70 wt%. The content of caffeine was 5.5 wt%. Non-polymer catechins/caffeine = 6.1. The content of gallates was 50.7 wt%. Oxalic acid/non-polymer catechins = 0.06.

### (*1) Green tea extract D

A concentrate D of green tea extract. The content of non-polymer catechins was 81.40 wt%. The content of caffeine was 0.0073 wt%. Non-polymer catechins/caffeine = 12000. The content of gallates was 60.5 wt%. Oxalic acid/non-polymer catechins = 0.00001.

### (*1) Green tea extract E

To obtain a concentrate of green tea extract, domestically-produced sencha (middle-grade green tea) (1 kg) was extracted for 20 minutes with hot water of 95°C (30 kg), the extract was filtered through No. 2 filter paper, and then, the filtrate was promptly chilled to room temperature. Subsequently, water was distilled off at 40°C and 0.0272 kg/cm² to provide the product.
After the treatment, the content of non-polymer catechins was 22 wt%.
The weight ratio of non-polymer catechins to caffeine after the treatment = 3.2
The weight ratio of oxalic acid to non-polymer catechins after the treatment = 0.07

### <Production process of the packaged beverages of Examples 1-5 and Comparative Examples 1-3>

In accordance with each typical sport drink formulation shown in Table 1, the individual ingredients were mixed together, and deionized water was then added to bring the total volume to 100 mL so that a mixed solution was prepared. Based on the Food Sanitation Act, sterilization and hot-pack filling were conducted to produce a packaged beverage. Ingredient data of the beverage are also shown. An assessment was performed as to whether or not each beverage has a taste reduced in bitterness and astringency and suited for long-term drinking as intended in the present invention. Thirty male monitors participated in this assessment. Those monitors were instructed to continuously ingest the beverages as much as 500 mL per day for 1 month, respectively, and after the continued one-month drinking, to give ranking scores to their assessments of the beverages in accordance with the following standards. The packaged beverages stored in a refrigerator were used in the test.

A: Suited
B: Suited a little
C: A little difficult to drink
D: Not suited for drinking

The stability of bitterness and astringency was assessed using 30 male monitors. Those monitors were instructed to ingest the beverages as much as 500 mL once per beverage, respectively, both shortly after the production of the beverages and after their storage at 55°C for 7 days, and were then instructed to give ranking scores to their assessments of the thus-stored beverages relative to the beverages shortly after the production in accordance with the following standards.

A: Not changed
B: Slightly changed
C: Changed
D: Substantially changed

The feelings as the beverages passed down the throat were assessed using 30 male monitors. Those monitors were instructed to ingest the beverages as much as 500 mL once per beverage, respectively, and were then instructed to give ranking scores in accordance with the following standards.

Feeling as each beverage passed down the throat
A: Good
B: A little better
C: A little poorer
D: Poor
Concerning the color tone stability of each beverage, the beverage produced and filled in a clear PET bottle of 500-mL capacity was stored at 55°C for 1 month. Trained ten assessors were instructed to visually give ranking scores to a change in the color tone of the beverage during its storage in accordance with the following standards.
A: Not changed
B: Slightly changed
C: Changed
D: Substantially changed

The sports drink (Comparative Example 1), using the green tea extract E as it is, was found to be strong in bitterness, poor in long-term drinkability, and no good with the feeling as it passed down the throat. Comparative Example 2 was good in the initial feeling as it passed down the throat, but was poor in the stability of bitterness and astringency and was not suited for long-term drinking. In the formulations of Examples 1-5, on the other hand, the purified products of green tea extract were used to make adjustments in ingredients and to meet the beverage composition specified by the present invention, so that the packaged beverages were free not only of the flavor and taste of green tea but also of other foreign flavor and taste, were reduced in bitterness and astringency and were suited for long-term drinking, were excellent in the stability of bitterness and astringency and the feelings as they passed down the throat, hardly changed in the external appearances of the beverages when stored at high temperatures, and remained stable in color tone over a long term even when filled and stored in clear containers.

### Examples 6-10 & Comparative Examples 6-10

Packaged beverages were each produced by mixing the corresponding ingredients shown in Table 2 and then conducting predetermined post-treatment.
In Table 2, "ND" indicates that the corresponding ingredient was not detected.

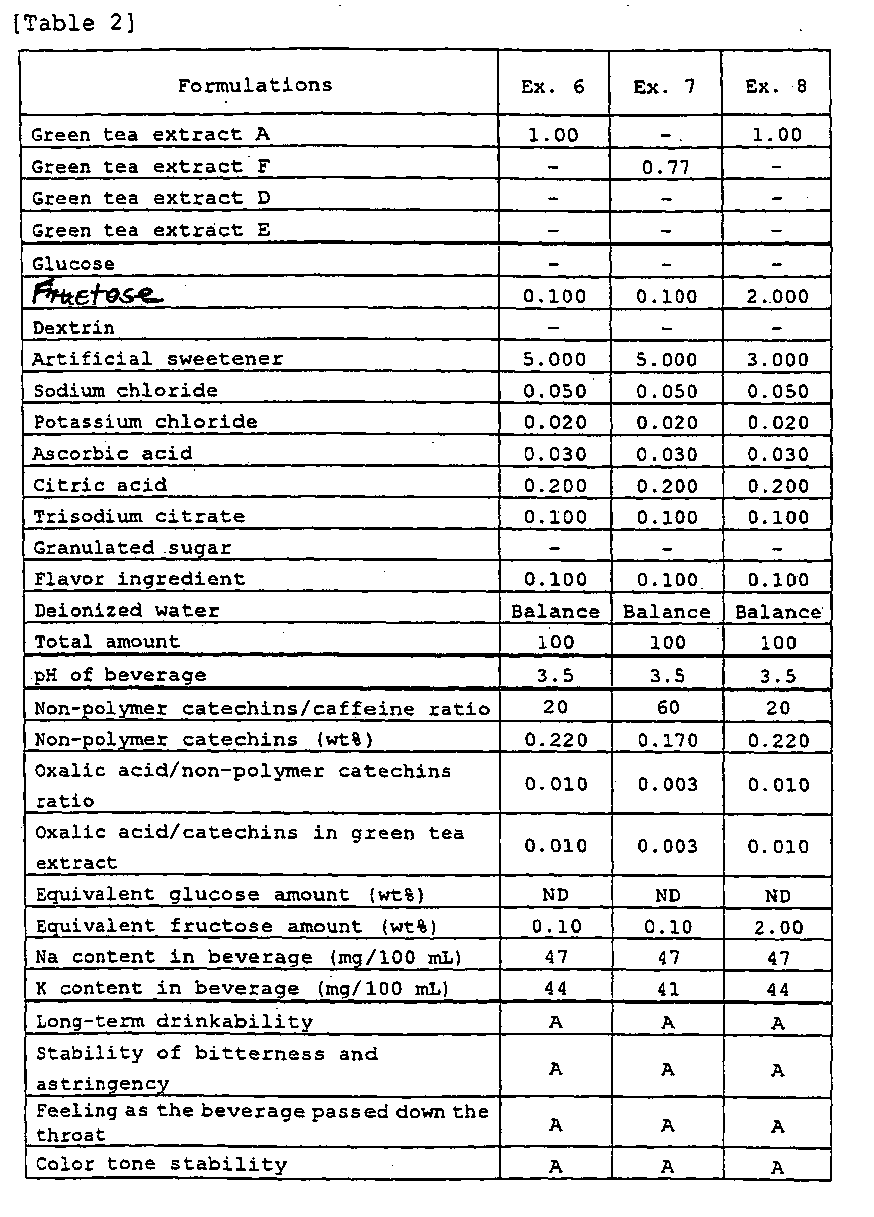

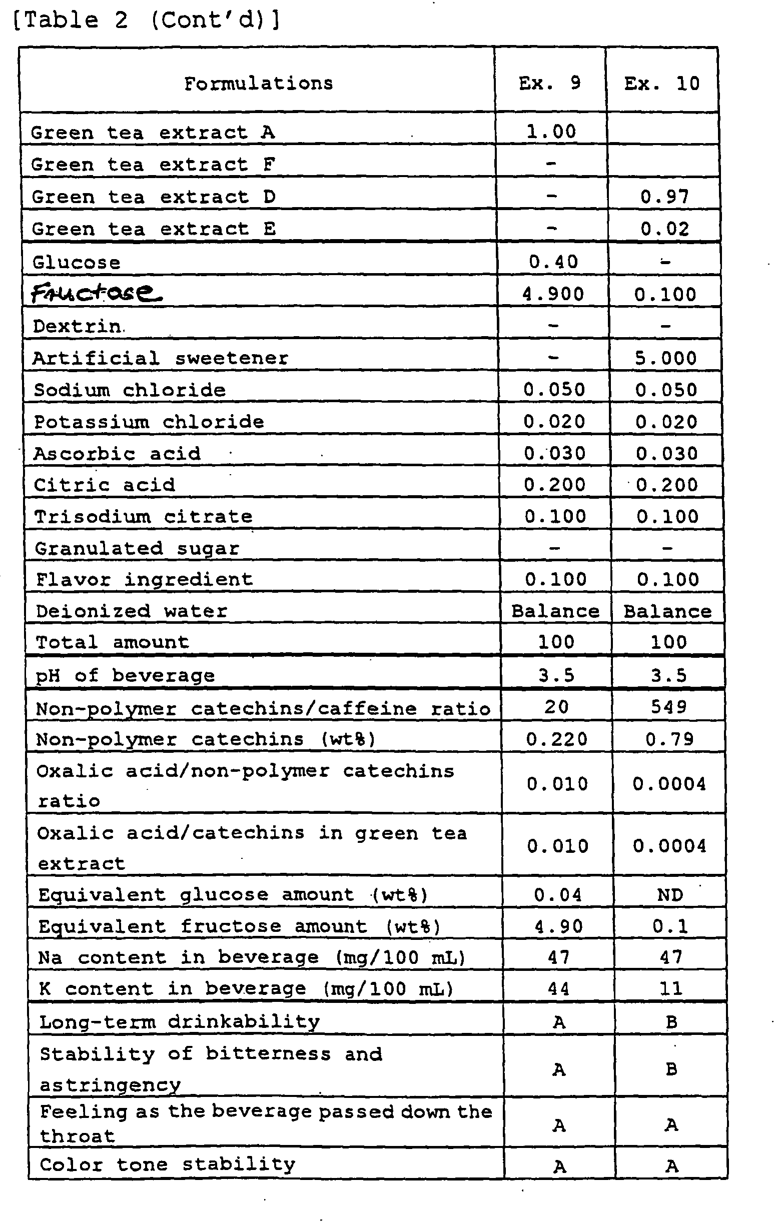

### (*1) Green tea extract A (same as in Table 1)

### (*1) Green tea extract F

"POLYPHENON HG" (100 g, product of Tokyo Food Techno Co., Ltd.) was suspended as a concentrate of green tea extract in a 95% aqueous solution of ethanol (490.9 g) at room temperature under a stirring condition of 250 r/min. After activated carbon "KURARAY COAL GLC" (25 g, product of Kuraray Chemical K.K.) and acid clay "MIZKAACE #600" (75 g, product of Mizusawa Chemical Industries, Ltd.) were poured, the resulting mixture was continuously stirred for about 10 minutes. Subsequent to the dropwise addition of a 40% aqueous solution of ethanol (409.1 g) over 10 minutes, stirring was continued for about 30 minutes still at room temperature. After the activated carbon and a precipitate were filtered off by No. 2 filter paper, the filtrate was filtered again through a 0.2 urn membrane filter. Finally, deionizedwater (200 g) was added to the filtrate, and ethanol was distilled off at 40°C and 0.0272 kg/cm² to obtain the product.
After the treatment, the content of non-polymer catechins was 22 wt%.
The weight ratio of non-polymer catechins to caffeine after the treatment = 60.0
The weight ratio of oxalic acid to non-polymer catechins after the treatment = 0.003

### (*1) Green tea extract D (same as in Table 1)

### (*1) Green tea extract E (same as in Table 1)

### <Production process of the packaged beverages of Examples 6-10>

In accordance with each typical sport drink formulation shown in Table 2, the individual ingredients were mixed together, and deionized water was then added to bring the total volume to 100 mL so that a mixed solution was prepared. Based on the Food Sanitation Act, sterilization and hot-packfilling were conducted to produce a packaged beverage. Ingredient data of the beverage are also shown.
In a similar manner as in Examples 1-5, an assessment was performed as to whether or not each beverage had a taste reduced in bitterness and astringency and suited for long-term drinking as intended in the present invention.
In Examples 6-10, the packaged beverages were free not only of the flavor and taste of green tea but also of other foreign flavor and taste, were reduced in bitterness and astringency and were suited for long-term drinking, were excellent in the stability of bitterness and astringency and the feelings as they passed down the throat, hardly changed in the external appearances of the beverages when stored at high temperatures, and remained stable in color tone over a long term even when filled and stored in clear containers.

## Claims

1. A packaged beverage with a green tea extract mixed therein, comprising the following ingredients (A), (B) and (C):
(A) from 0.01 to 1.0 wt% of non-polymer catechins,
(B) oxalic acid or a salt thereof, and
(C) caffeine,
wherein a content weight ratio [(B)/(A)] of said oxalic acid or salt thereof (B) to said non-polymer catechins (A) is from 0.00005 to 0.1, and a content weight ratio [(A)/(C)] of said non-polymer catechins (A) to said caffeine (C) is from 5 to 10000, and
wherein the beverage further comprises from 0.001 to 0.5 wt% of sodium ions and from 0.001 to 0.2 wt% of potassium ions.

2. The packaged beverage according to claim 1, further comprising (D) from 0.0001 to 20 wt% of a sweetener.

3. The packaged beverage according to claim 2, wherein said sweetener (D) is a carbohydrate, artificial sweetener or glycerol.

4. The packaged beverage according to claim 3, wherein said carbohydrate is selected from a monosaccharide, disaccharide, oligosaccharide or conjugated polysaccharide, or a mixture thereof.

5. The packaged beverage according to any one of claims 1-4, which has a pH of from 2 to 5.

6. The packaged beverage according to any one of claims 1-5, wherein said green tea extract as a raw material is one obtained by removing caffeine from a concentrate of green tea extract, said concentrate comprising from 20 to 90 wt% of non-polymer catechins based on a solid content thereof, such that a content weight ratio [(A)/(C)] of said non-polymer catechins (A) to said caffeine (C) falls within a range of from 5 to 10000.

7. The packaged beverage according to any one of claims 1-6, which is filled in a clear container.

8. The packaged beverage according to any one of claims 1-7, which is a soft drink.

9. The packaged beverage according to claim 8, which is a carbonated beverage, a beverage with a fruit extract, a juice with a vegetable extract, a near water, or a sports drink.

## Patentansprüche

1. Abgepacktes Getränk mit einem darin gemischten Grüntee-Extrakt, umfassend die folgenden Bestandteile (A), (B) und (C):
(A) von 0,01 bis 1,0 Gew.-% Nichtpolymerkatechine,
(B) Oxalsäure oder ein Salz davon und
(C) Kaffein,
worin ein Gewichtsverhältnis des Gehaltes [(B)/(A)] der Oxalsäure oder des Salzes davon (B) zu den Nichtpolymerkatechinen (A) von 0,00005 bis 0,1 ist und das Gewichtsverhältnis des Gehaltes von [(A)/(C)] der Nichtpolymerkatechine (A) zum Kaffein (C) von 5 bis 10000 ist, und
worin das Getränk weiterhin von 0,001 bis 0,5 Gew.-% Natriumionen und von 0,001 bis 0,2 Gew.-% Kaliumionen umfasst.

2. Abgepacktes Getränk nach Anspruch 1, weiterhin umfassend (D) von 0,0001 bis 20 Gew.-% eines Süßstoffes.

3. Abgepacktes Getränk nach Anspruch 2, worin der Süßstoff (D) ein Kohlenhydrat, künstlicher Süßstoff oder Glycerin ist.

4. Abgepacktes Getränk nach Anspruch 3, worin das Kohlenhydrat ausgewählt ist aus einem Monosaccharid, Disaccharid, Oligosaccharid oder konjugierten Polysaccharid oder einer Mischung davon.

5. Abgepacktes Getränk nach einem der Ansprüche 1 bis 4, mit einem pH von 2 bis 5.

6. Abgepacktes Getränk nach einem der Ansprüche 1 bis 5, worin der Grüntee-Extrakt als Rohmaterial erhalten ist durch Entfernen von Kaffein von einem Konzentrat von Grüntee-Extrakt, wobei das Konzentrat von 20 bis 90 Gew.-% Nichtpolymerkatechine, bezogen auf einen Feststoffgehalt davon umfasst, so dass das Gewichtsverhältnis des Gehaltes [(A)/(C)] der Nichtpolymerkatechine (A) zum Kaffein (C) innerhalb eines Bereiches von 5 bis 10000 fällt.

7. Abgepacktes Getränk nach einem der Ansprüche 1 bis 6, das in einen klaren Behälter gefüllt ist.

8. Abgepacktes Getränk nach einem der Ansprüche 1 bis 7, das ein alkoholfreies Getränk ist.

9. Abgepacktes Getränk nach Anspruch 8, das ein kohlensäurehaltiges Getränk, ein Getränk mit einem Fruchtextrakt, ein Saft mit einem Pflanzenextrakt, ein wasserähnliches Getränk oder ein Sportgetränk ist.

## Revendications

1. Boisson conditionnée dans laquelle est mélangé un extrait de thé vert, comprenant les ingrédients (A), (B) et (C) suivants :
(A) de 0,01 à 1.0 % en poids de catéchines non polymères,
(B) de l'acide oxalique ou un sel de celui-ci, et
(C) de la caféine,
dans laquelle le rapport en poids des teneurs [(B)/(A)] dudit acide oxalique ou son sel (B) sur lesdites catéchines non polymères (A) est de 0,00005 à 0,1, et le rapport en poids des teneurs [(A)/(C)] desdites catéchines non polymères (A) sur ladite caféine (C) est de 5 à 10000, et
laquelle boisson comprend en outre de 0,001 à 0,5 % en poids d'ions de sodium et de 0,001 à 0,2 % en poids d'ions de potassium.

2. Boisson conditionnée selon la revendication 1, comprenant en outre (D) de 0,0001 à 20 % en poids d'un édulcorant.

3. Boisson conditionnée selon la revendication 2, dans laquelle ledit édulcorant (D) est un hydrate de carbone, un édulcorant artificiel ou le glycérol.

4. Boisson conditionnée selon la revendication 3, dans laquelle ledit hydrate de carbone est choisi parmi un monosaccharide, un disaccharide, un oligosaccharide ou un polysaccharide conjugué, ou un de leurs mélanges.

5. Boisson conditionnée selon l'une quelconque des revendications 1 à 4, qui a un pH de 2 à 5.

6. Boisson conditionnée selon l'une quelconque des revendications 1 à 5, dans laquelle ledit extrait de thé vert servant de matière première est obtenu par élimination de la caféine dans un concentré d'extrait de thé vert, ledit concentré comprenant de 20 à 90 % en poids de catéchines non polymères, sur la base de sa teneur en extrait sec, de telle sorte que le rapport en poids des teneurs [(A)/(C)] desdites catéchines non polymères (A) sur ladite caféine (C) soit situé dans la plage allant de 5 à 10000.

7. Boisson conditionnée selon l'une quelconque des revendications 1 à 6, de laquelle est rempli un récipient transparent.

8. Boisson conditionnée selon l'une quelconque des revendications 1 à 7, qui est une boisson sans alcool.

9. Boisson conditionnée selon la revendication 8, qui est une boisson gazeuse, une boisson avec un extrait de fruit, un jus avec un extrait de légume, une boisson proche de l'eau, ou une boisson énergétique.
